# EUROPEAN PATENT SPECIFICATION

(11) **EP 4 606 507 B1**
(45) Date of publication and mention of the grant of the patent: **25.11.2026**
(21) Application number: 25156064.5
(22) Date of filing: 05.02.2025
(51) Int. Cl.: B23K 9/18

(54) **SUBMERGED ARC WELDING CONTROL METHOD**
STEUERUNGSVERFAHREN FÜR DAS UNTERPULVERSCHWEISSEN
PROCÉDÉ DE COMMANDE DE SOUDAGE À L'ARC SUBMERGÉ

(30) Priority: 26.02.2024 JP 2024026376
(43) Date of publication of application: 27.08.2025
(73) Proprietor: DAIHEN Corporation, Yodogawa-ku Osaka-shi Osaka 532-8512 (JP)
(72) Inventor: Baba, Hayato, Osaka-shi, 532-8512 (JP); Honda, Reo, Osaka-shi, 532-8512 (JP)
(74) Representative: Boult Wade Tennant LLP

(56) References cited:
- US-B2- 9 579 742

## Description

### FIELD

The present disclosure relates to a method for controlling submerged arc welding. In particular, the present disclosure relates to the short-circuit release control of submerged arc welding.

### BACKGROUND

There is disclosed a submerged arc welding method capable of controlling an arc length by variable feed speed control that changes the feed speed of a welding wire according to the welding voltage (see Japanese Patent Application Publication No. H9-271944, for example).

In the variable feed speed control, the welding voltage correlating to an arc length is maintained at an appropriate value by performing feedback control on the feed speed based on the error between the detection value of the welding voltage and the setting value thereof. In the submerged arc welding using a thick wire, the melting speed of the wire does not change easily even if the welding current changes. Thus, it is difficult to obtain the self-controlling effect of the arc length generally utilized in consumable electrode arc welding with a welding power supply having constant voltage characteristics. For this reason, in submerged arc welding, the arc length is maintained at an appropriate value by performing variable feed speed control with a welding power supply having constant current characteristics.

Submerged arc welding is a welding method basically performed under the welding condition where a short circuit does not occur. Accordingly, if a short circuit occurs between a welding wire and a base material (molten pool) in submerged arc welding due to the change of a welding state, the welding quality may be deteriorated by the occurrence of a welding failure, uneven penetration, and so on.

Accordingly, an object of the present disclosure is to provide a submerged arc welding control method capable of maintaining an excellent welding quality even if a short circuit occurs between a welding wire and a base material.

US 9 579 742 B2 discloses, according to its abstract, an electric arc welder for depositing weld metal along a groove between two edges of a metal workpiece. The welder comprises: a leading electrode driven toward a point in the groove by a first wire feeder operated at a first speed by a first motor with a speed control input and a tachometer derived first feedback signal, a trailing electrode driven toward the same point by a second wire feeder operated at a second speed by a second motor with a speed control input and a tachometer derived second feedback signal, a first power source directing a first current to flow through the leading electrode and a second power source causing a second current to flow through the trailing electrode with the current flow being in a series arc circuit. The second power source being grounded to the workpiece to modify the series arc current so ground current flows to the workpiece whereby the second current is generally equal to the first current minus the ground current.

### SUMMARY

In view of the above circumstances, there is provided a submerged arc welding control method for performing welding by feeding a welding wire and providing a welding voltage and a welding current between the welding wire and a base material to generate an arc. The submerged arc welding control method may include: providing a short-circuit current when a short circuit between the welding wire and the base material is determined; and controlling a peak value of the short-circuit current to be in a range of 1500 A to 2500 A.

Preferably, the submerged arc welding control method may further include controlling a rise rate of the short-circuit current to be in a range of 400 A/ms to 1500 A/ms.

Preferably, the submerged arc welding control method may further include: outputting the welding voltage and the welding current as an alternating voltage and an alternating current by cyclically switching an output polarity between an electrode positive polarity and an electrode negative polarity; and controlling the output polarity not to be switched during the short circuit.

Preferably, the submerged arc welding control method may further include switching the output polarity by lowering an absolute value of the welding current to a polarity switching current value after the short circuit is released and the arc is regenerated.

With the above arrangements, the submerged arc welding control method of the present disclosure enables the user to obtain excellent welding quality even if a short circuit occurs between a welding wire and a base material.

### DRAWINGS

Fig. 1 is a block diagram showing a welding device for performing a submerged arc welding control method according to an embodiment of the present disclosure.
Fig. 2 is a timing chart of each signal in the welding device of Fig. 1 when the welding current having a sinusoidal waveform is provided in an AC output mode.
Fig. 3 is a timing chart of each signal in the welding device of Fig. 1 in a DC output mode.

### DETAILED DESCRIPTION

An embodiment of the present disclosure will be described below with reference to the drawings.

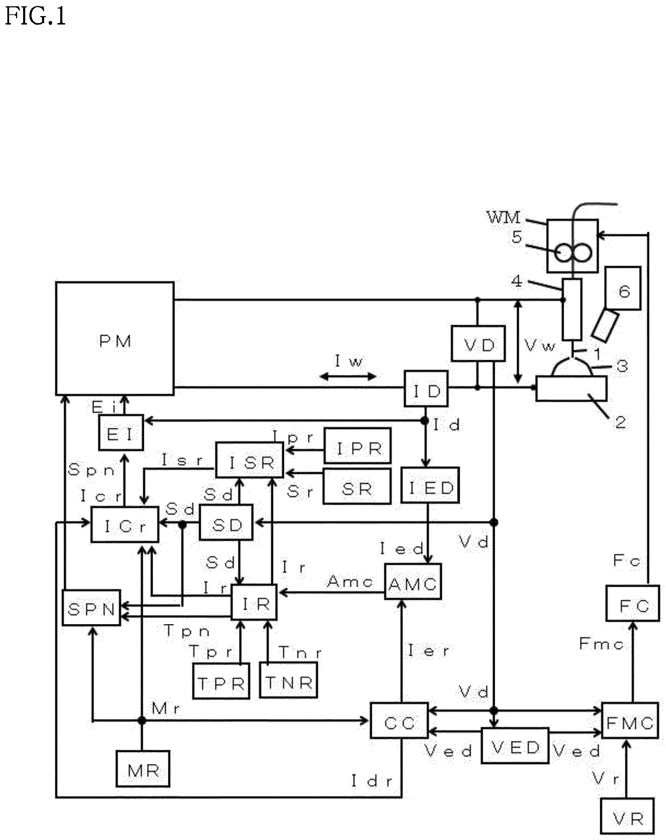

Fig. 1 is a block diagram showing a welding device for performing a submerged arc welding control method according to the embodiment of the present disclosure. The following describes each block with reference to the figure.

A power main circuit PM is connected to a commercial power supply (not illustrated) of three-phase 200 V, for example, receives a current error amplification signal Ei and a polarity switching signal Spn, which are described below, performs inverter control according to the current error amplification signal Ei, and outputs a welding current Iw and a welding voltage Vw, each of which is either AC or DC, by switching between an electrode positive polarity EP and an electrode negative polarity EN according to the polarity switching signal Spn. Although not illustrated, the power main circuit PM includes a primary rectifier that rectifies the commercial power supply, a smoothing capacitor that smooths the rectified direct current, a primary-side inverter circuit that converts the smoothed direct current into a high-frequency alternate current, a high-frequency transformer that lowers the voltage of the high-frequency alternate current to a value suitable for welding, a secondary rectifier that rectifies the low-voltage high-frequency alternate current to a direct current, a reactor that smooths the rectified direct current, a secondary-side inverter circuit that switches the smoothed direct current between the electrode positive polarity EP and the electrode negative polarity EN according to the polarity switching signal Spn, a modulation circuit that outputs a pulse width modulation signal with the current error amplification signal Ei as an input, and a drive circuit that drives a switching element in the primary-side inverter circuit with the pulse width modulation signal as an input.

A welding wire 1 is fed through a welding torch 4 by the rotation of a feed roll 5 coupled to a feeder WM, so that an arc 3 is generated between the welding wire 1 and a base material 2. The welding voltage Vw is applied across a feed chip (not illustrated) in the welding torch 4 and the base material 2 to provide the welding current Iw. A flux feeder 6 is arranged in the welding device, and supplies flux (not illustrated) to an arc generator. Since the flux covers the arc generator, the arc 3 is not visible from the outside. The welding torch 4 is mounted on an automatic carriage or a welding robot, for example, and moves along a welding line.

An output mode setting circuit MR is a switch or the like provided on a front panel of the welding power supply, and outputs an output mode setting signal Mr which turns to High level when the AC output mode is selected by a welder and turns to Low level when the DC output mode is selected by the welder.

A voltage detection circuit VD detects an instantaneous value of the welding voltage Vw, converts the instantaneous value into an absolute value, and outputs a voltage detection signal Vd.

A voltage effective value detection circuit VED receives the voltage detection signal Vd as an input, calculates an effective value therefrom, and outputs a voltage effective value detection signal Ved.

An external characteristic control circuit CC outputs a current effective value setting signal Ier and a DC setting signal Idr, which are calculated based on the following formula (1) or (2) with the output mode setting signal Mr, the voltage effective value detection signal Ved, and the voltage detection signal Vd as inputs.

### (1) When the output mode setting signal Mr is at High level (AC output mode)

External characteristics are the output characteristics of the welding power supply, and can be expressed as a function Ve = f(Ie) with an effective value Ie of the welding current as an input and an effective value Ve of the welding voltage Vw as an output. The following formula is obtained when the function is defined as a straight line. $Ve = K ⋅ Ie + V 0$

Note that K[V/A] is a predetermined gradient of the straight line, and V0 is a predetermined value of Ve when Ie = 0. When the above formula is rearranged by Ie, the following formula is obtained where Ie is substituted by the current effective value setting signal Ier and Ve is substituted by the voltage effective value detection signal Ved. $Ier = \left(Ved -V0\right) / K$ Formula (1)

In the AC output mode, the external characteristics are controlled by this formula. K is set within a range of approximately -0.1 to -40 V/100 A, and V0 is set with a range of approximately 20 to 50 V.

### (2) When the output mode setting signal Mr is at Low level (DC output mode)

The following formula is obtained from the above formula (1) when Ier is substituted by Idr and Ved is substituted by Vd. $Idr = \left(Vd -V0\right) / K$ Formula (2)

In the DC output mode, the external characteristics are controlled by this formula.

A current detection circuit ID detects an instantaneous value of the welding current Iw, converts the instantaneous value into an absolute value, and outputs a current detection signal Id.

A current effective value detection circuit IED receives the current detection signal Id as an input, calculates an effective value therefrom, and outputs a current effective value detection signal Ied.

A current amplitude modulation circuit AMC receives the current effective value detection signal Ied and the current effective value setting signal Ier as inputs, performs modulation control based on the error amplification value between the values of these signals, and outputs a current amplitude modulation signal Amc. This circuit causes the amplitude of the welding current Iw to change such that the effective value of the welding current will be equal to the setting value.

An electrode positive polarity period setting circuit TPR outputs a predetermined electrode positive polarity period setting signal Tpr. An electrode negative polarity period setting circuit TNR outputs a predetermined electrode negative polarity period setting signal Tnr.

A short-circuit determination circuit SD receives the voltage detection signal Vd as an input, and outputs a short-circuit determination signal Sd. When the value of the voltage detection signal Vd is less than a predetermined short-circuit determination value, the short-circuit determination circuit SD determines that the welding wire 1 and the base material 2 are in a short-circuit state, and outputs the short-circuit determination signal Sd at High level. When the value of the voltage detection signal Vd is not less than the predetermined short-circuit determination value, the short-circuit determination circuit SD determines that the welding wire 1 and the base material 2 are in an arc generation state, and outputs the short-circuit determination signal Sd at Low level. Submerged arc welding requires a welding voltage of at least about 20 V in order to maintain an arc, regardless of the diameter of the welding wire. Accordingly, the short-circuit determination value must be no greater than 20 V, and more preferably be in the range of 10 V to 18 V, both inclusive. When the short-circuit determination value exceeds 18 V, it increases the possibility of erroneously determining a momentary change in the welding voltage as a short circuit. Submerged arc welding may be performed by connecting an output terminal of the welding power supply to the welding torch with a long welding cable of several tens of meters. In this case, if the detection position of the welding voltage is at the output terminal, the amount of voltage drop caused by the welding cable is added to the actual welding voltage. Thus, if the short-circuit determination value is too small, it will be difficult to determine a short circuit. For this reason, it is preferable that the short-circuit determination value not be less than 10 V.

A current setting circuit IR receives the electrode positive polarity period setting signal Tpr, the electrode negative polarity period setting signal Tnr, the current amplitude modulation signal Amc, and the short-circuit determination signal Sd as inputs, performs the following processing steps (1) to (5), outputs a current setting signal Ir having a half-cycle waveform of a sinusoidal wave or a rectangular wave, and also outputs a polarity signal Tpn.
(1) During an electrode positive polarity period Tep set by the electrode positive polarity period setting signal Tpr, a half-cycle waveform of a sinusoidal wave is outputted as the current setting signal Ir, where the sinusoidal wave has a polarity switching current value at the start point and end point of the period and its amplitude is set by the current amplitude modulation signal Amc. During the electrode positive polarity period Tep, the polarity signal Tpn is outputted at High level.
(2) Then, during an electrode negative polarity period Ten set by the electrode negative polarity period setting signal Tnr, a half-cycle waveform of a sinusoidal wave is outputted as the current setting signal Ir, where the sinusoidal wave has a polarity switching current value at the start point and end point of the period and its amplitude is set by the current amplitude modulation signal Amc. During the electrode negative polarity period Ten, the polarity signal Tpn is outputted at Low level.
(3) When the short-circuit determination signal Sd is at Low level (arc period), the above steps (1) and (2) are repeated.
(4) When the short-circuit determination signal Sd is at High level (short-circuit period) and the polarity signal Tpn is at High level (electrode positive polarity EP), only the step (1) is repeated.
(5) When the short-circuit determination signal Sd is at High level (short-circuit period) and the polarity signal Tpn is at Low level (electrode negative polarity EN), only the step (2) is repeated.

The polarity switching setting circuit SPN receives the output mode setting signal Mr, the short-circuit determination signal Sd, and the polarity signal Tpn as inputs, performs the following processing steps, and outputs the polarity switching signal Spn.
(1) When the output mode setting signal Mr is at High level (AC output mode), the short-circuit determination signal Sd is at Low level (arc period), and the polarity signal Tpn is at High level (electrode positive polarity EP), the polarity switching signal Spn is outputted at High level.
(2) When the output mode setting signal Mr is at High level (AC output mode), the short-circuit determination signal Sd is at Low level (arc period), and the polarity signal Tpn is at Low level (electrode negative polarity EN), the polarity switching signal Spn is outputted at Low level.
(3) When the output mode setting signal Mr is at High level (AC output mode), and the short-circuit determination signal Sd turns to High level (short-circuit period), the polarity switching signal Spn is maintained at the value of this point and outputted. As a result, control is performed so as not to switch the polarity during the short-circuit period.
(4) When the output mode setting signal Mr is at Low level (DC output mode), the polarity switching signal Spn, which is at High level when the electrode positive polarity EP is set, and which is at Low level when the electrode negative polarity EN is set, is outputted.

A short-circuit current peak value setting circuit IPR outputs a predetermined short-circuit current peak value setting signal Ipr. It is preferable that the value of the short-circuit current peak value setting signal Ipr be set in the range of 1500 A to 2500 A, both inclusive, and is more preferable that the value be set in the range of 1800 A to 2200 A, both inclusive.

A short-circuit current rise rate setting circuit SR outputs a predetermined short-circuit current rise rate setting signal Sr. It is preferable that the value of the short-circuit current rise rate setting signal Sr be set in the range of 400 A/ms to 1500 A/ms, both inclusive, and is more preferable that the value be set in the range of 600 A/ms to 1200 A/ms, both inclusive.

A short-circuit current setting circuit ISR receives the current setting signal Ir, the short-circuit determination signal Sd, the short-circuit current peak value setting signal Ipr, and the short-circuit current rise rate setting signal Sr as inputs, and outputs a short-circuit current setting signal Isr. When the short-circuit determination signal Sd turns to High level (short circuit), the short-circuit current setting signal Isr rises from the value of the current setting signal Ir at the rate set by the short-circuit current rise rate setting signal Sr. When the short-circuit current setting signal Isr reaches the value of the short-circuit current peak value setting signal Ipr, the value of the short-circuit current setting signal Isr at this point is maintained.

A current control setting circuit ICR receives the output mode setting signal Mr, the short-circuit determination signal Sd, the current setting signal Ir, the DC setting signal Idr, and the short-circuit current setting signal Isr as inputs, performs the following processing step (1) or (2), and outputs a current control setting signal Icr.

### (1) When the output mode setting signal Mr is at High level (AC output mode)

When the short-circuit determination signal Sd is at Low level (arc period), the current setting signal Ir is outputted as the current control setting signal Icr. When the short-circuit determination signal Sd is at High level (short-circuit period), the short-circuit current setting signal Isr is outputted as the current control setting signal Icr.

### (2) When the output mode setting signal Mr is at Low level (DC output mode)

When the short-circuit determination signal Sd is at Low level (arc period), the DC setting signal Idr is outputted as the current control setting signal Icr. When the short-circuit determination signal Sd is at High level (short-circuit period), the short-circuit current setting signal Isr is outputted as the current control setting signal Icr.

A current error amplification circuit EI receives the current control setting signal Icr and the current detection signal Id as inputs, amplifies the error between the values of these signals, and outputs the current error amplification signal Ei. The welding device is subjected to constant current control by this circuit.

A voltage setting circuit VR outputs a predetermined voltage setting signal Vr.

A variable feed speed control circuit FMC receives the voltage effective value detection signal Ved and the voltage setting signal Vr as inputs, performs variable feed speed control using proportional (P) control, proportional-integral (PI) control, or proportional-integral-derivative (PID) control, based on the error amplification value between the values of these signals, and outputs a feed speed modulation signal Fmc. This circuit performs variable speed control on a feed speed Fw so that the arc length is maintained at an appropriate value. In the DC output mode, the voltage detection signal Vd may be used instead of the voltage effective value detection signal Ved.

A feed control circuit FC receives the feed speed modulation signal Fmc as an input, and outputs, to the feeder WM, a feed control signal Fc for controlling the feed speed Fw of the welding wire 1 to be the speed defined by the feed speed modulation signal Fmc.

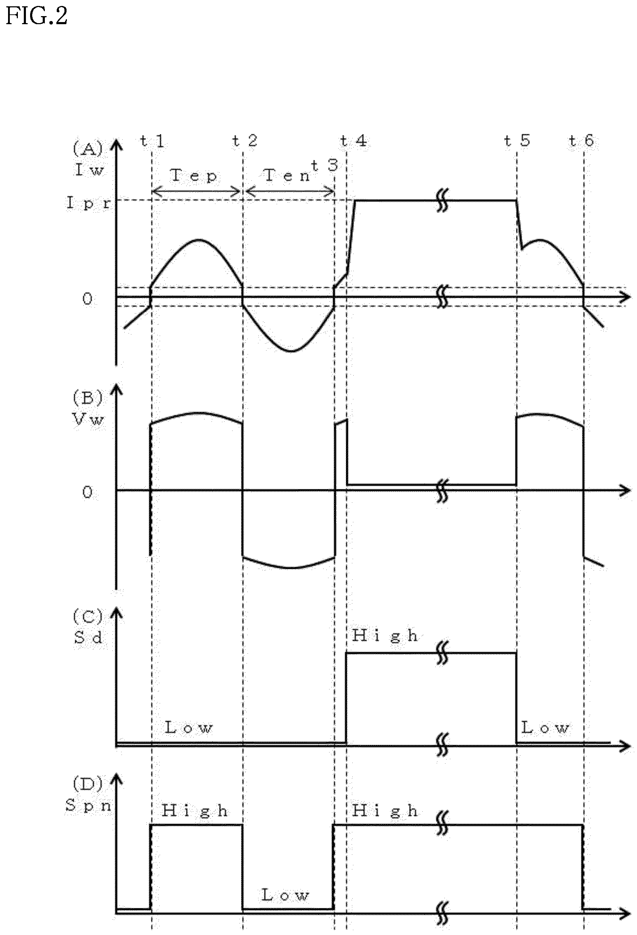

Fig. 2 is a timing chart of each signal in the welding device of Fig. 1 when the welding current having a sinusoidal waveform is provided in the AC output mode. Fig. 2(A) shows the change of the welding current Iw over time, Fig. 2(B) shows the change of the welding voltage Vw over time, Fig. 2(C) shows the change of the short-circuit determination signal Sd over time, and Fig. 2(D) shows the change of the polarity switching signal Spn over time. The following describes the operation of each signal with reference to the figure.

In this figure, positive values above 0 A and 0 V indicate the electrode positive polarity EP, and negative values below 0 A and 0 V indicate the electrode negative polarity EN.

During the period from time t1 to t2, the polarity switching signal Spn is at High level and has the electrode positive polarity EP, as shown in Fig. 2(D). As shown in Fig. 2(A), during the electrode positive polarity period Tep from time t1 to t2, the welding current Iw has a positive half-cycle waveform of a sinusoidal wave of an amplitude, which has a positive polarity switching current value at each of the start point t1 and end point t2 of the period and set by the current amplitude modulation signal Amc. During the period from time t2 to t3, the polarity switching signal Spn is at Low level and has the electrode negative polarity EN, as shown in Fig. 2(D). As shown in Fig. 2(A), during the electrode negative polarity period Ten from time t2 to t3, the welding current Iw has a negative half-cycle waveform of a sinusoidal wave of an amplitude, which has a negative polarity switching current value at each of the start point t2 and end point t3 of the period and set by the current amplitude modulation signal Amc. The electrode positive polarity period Tep is set by the electrode positive polarity period setting signal Tpr in Fig. 1. The electrode negative polarity period Ten is set by the electrode negative polarity period setting signal Tnr in Fig. 1. The current effective value setting signal Ier in Fig. 1 is calculated by inputting the voltage effective value detection signal Ved into the above formula (1). The amplitude of the welding current is subjected to modulation control such that the current effective value detection signal Ied in Fig. 1 will be equal to the current effective value setting signal Ier. This allows control over external characteristics. For example, Tep = 10 ms, Ten = 10 ms, the polarity switching current value = ±200 A, and the amplitude = ±1000 A.

As shown in Fig. 2(B), the welding voltage Vw has a waveform similar to a rectangular wave. The effective value of the welding voltage Vw correlates to the arc length. The feed speed Fw in Fig. 1 is subjected to variable speed control so that the voltage effective value detection signal Ved will be equal to the voltage setting signal Vr in Fig. 1. This allows control over the arc length.

From time t3, the polarity switching signal Spn is at High level (electrode positive polarity EP) again as shown in Fig. 2(D), and the operation as described above is repeated. When the welding wire and the base material are in a short-circuit state at time t4 in the electrode positive polarity EP, the welding voltage Vw plummets to a short-circuit voltage value of a few volts as shown in Fig. 2(B), and the short-circuit determination signal Sd turns to High level as shown in Fig. 2(C). In response to this, the welding current Iw is controlled to the value of the short-circuit current setting signal Isr in Fig. 1, as shown in Fig. 2(A). The welding current Iw rises at the rise rate set by the short-circuit current rise rate setting signal Sr in Fig. 1 from time t4. When the welding current Iw reaches the peak value set by the short-circuit current peak value setting signal Ipr in Fig. 1, the welding current Iw maintains the peak value until the short circuit is released at time t5. During the short-circuit period from time t4 to t5, the polarity switching signal Spn maintains at High level and does not change the polarity, as shown in Fig. 2(D). When the short circuit is released and an arc is regenerated at time t5, the welding voltage Vw surges to an arc voltage value of several tens of volts as shown in Fig. 2(B), and the short-circuit determination signal Sd turns to Low level as shown in Fig 2(C). In response to this, the welding current Iw decreases from time t5 and returns to have a half-cycle waveform of a sinusoidal wave in the arc period, as shown in Fig. 2(A). Then, at time t6, the welding current Iw has the polarity switching current value, and as shown in Fig. 2(D), the polarity switching signal Spn turns to Low level and has the electrode negative polarity EN. Thereafter, the same operations as those from time t2 to t3 are performed. The short circuit period from time t4 to t5 is approximately 200 ms, for example. The period of each of the electrode positive polarity EP and the electrode negative polarity EN is approximately 10 ms. In this case, the short-circuit period will be 10 times longer.

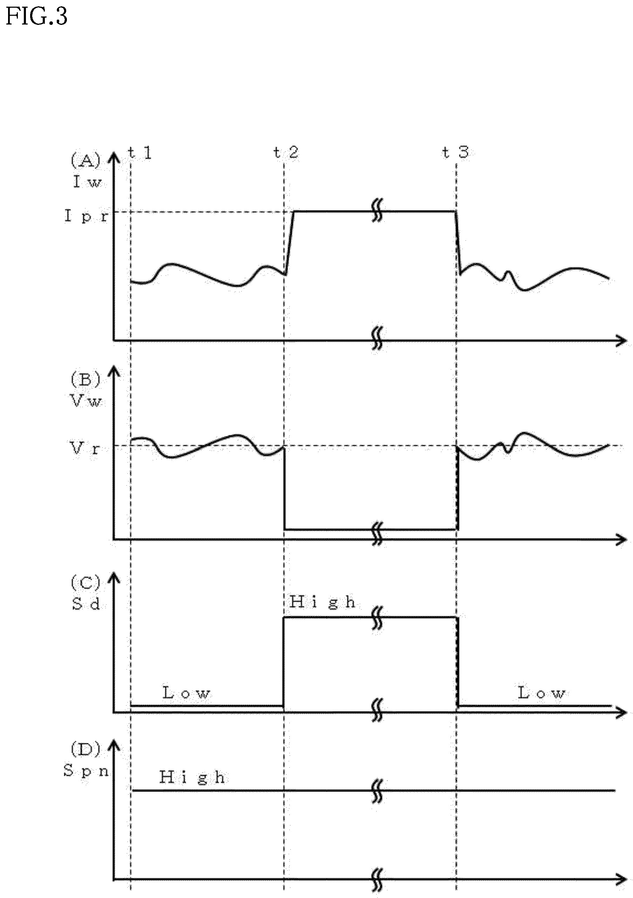

Fig. 3 is a timing chart of each signal in the welding device of Fig. 1 in the DC output mode. Fig. 3(A) shows the change of the welding current Iw over time, Fig. 3(B) shows the change of the welding voltage Vw over time, Fig. 3(C) shows the change of the short-circuit determination signal Sd over time, and Fig. 3(D) shows the change of the polarity switching signal Spn over time. The following describes the operation of each signal with reference to the figure.

Since the output mode is the DC output mode and the polarity is the electrode positive polarity EP, the polarity switching signal Spn is at High level through all periods and has the electrode positive polarity EP, as shown in Fig. 3(D). The period from time t1 to t2 is the arc period, and the short-circuit determination signal Sd is at Low level, as shown in Fig. 3(C). As shown in Fig. 3(A), the welding current Iw has a DC waveform, and is controlled to the value of the DC setting signal Idr in Fig. 1. The DC setting signal Idr is calculated by inputting the voltage detection signal Vd into the above formula (2). This allows control over external characteristics. As shown in Fig. 3(B), the welding voltage Vw has a DC waveform and has a value correlating to the arc length. The feed speed Fw in Fig. 1 is subjected to variable speed control so that the voltage detection signal Vd will be equal to the voltage setting signal Vr in Fig. 1. This allows control over the arc length.

When the welding wire and the base material are in a short-circuit state at time t2, the welding voltage Vw plummets to a short-circuit voltage value of a few volts, and the short-circuit determination signal Sd turns to High level as shown in Fig. 3(C). In response to this, the welding current Iw is controlled to the value of the short-circuit current setting signal Isr in Fig. 1, as shown in Fig. 3(A). The welding current Iw rises at the rise rate set by the short-circuit current rise rate setting signal Sr in Fig. 1 from time t4. When the welding current Iw reaches the peak value set by the short-circuit current peak value setting signal Ipr in Fig. 1, the welding current Iw maintains the peak value until the short circuit is released at time t3. When the short circuit is released and an arc is regenerated at time t3, the welding voltage Vw surges to an arc voltage value of several tens of volts as shown in Fig. 3(B), and the short-circuit determination signal Sd turns to Low level as shown in Fig 3(C). In response to this, the welding current Iw decreases from time t3 and returns to have a DC waveform in the arc period, as shown in Fig. 3(A).

The following describes advantages of the present embodiment. According to the embodiment, when it is determined that a short circuit has occurred between the welding wire and the base material, the short-circuit current, whose peak value is controlled to be in the range of 1500 A to 2500 A, both inclusive, is provided. Submerged arc welding is a welding method basically performed under the welding condition where a short circuit does not occur. Accordingly, if a short circuit occurs between the welding wire and the base material (molten pool) in submerged arc welding due to the change of a welding state, the welding quality may be deteriorated by the occurrence of a welding failure, uneven penetration, and so on. This is because in conventional technology, even if a short circuit occurs, no special control is performed to promptly release the short circuit and return the state to an arc generation state, which results in the short circuit period continuing for 500 ms or longer. On the other hand, if a short circuit occurs in the present embodiment, a control is performed to thereby provide a short-circuit current having a peak value of 1500 A to 2500 A. The provision of a short-circuit current having a large current value facilitates melting of the projecting portion of the welding wire, which allows a prompt release of a short circuit. As a result, in the present embodiment, the short-circuit period can be shortened to approximately 200 ms or less, thus suppressing deterioration of the welding quality. If the peak value of the short-circuit current is less than 1500 A, the effect of promptly releasing a short circuit will be insufficient, and if it exceeds 2500 A, the load on the welding device will be too heavy. It is more preferable to control the peak value of the short-circuit current in the range of 1800 A to 2200 A, both inclusive.

More preferably, according to the present embodiment, the rise rate of the short-circuit current is controlled to 400 A/ms to 1500 A/ms. If the rise rate is less than 400 A/ms, the effect of promptly releasing a short circuit will be insufficient. If the rise rate exceeds 1500 A/ms, the welding state may become unstable. Thus, controlling the rise rate to be in the range specified above can promptly release a short circuit without making the welding state unstable. It is more preferable to control the rise rate to 600 A/ms to 1200 A/ms.

More preferably, according to the present embodiment, an alternating welding voltage and an alternating welding current are output by cyclically switching the output polarity between an electrode positive polarity and an electrode negative polarity, and a control is performed so as not to switch the output polarity during the short circuit. If the output polarity is switched during a short circuit, the welding current will once decrease to 0 A, and a short circuit cannot be released promptly. Thus, according to the present embodiment, a control is performed so as not to switch the output polarity during a short circuit, thereby releasing the short circuit promptly.

More preferably, according to the present embodiment, the output polarity is switched by lowering an absolute value of the welding current to a polarity switching current value after the short circuit is released and the arc is regenerated. This makes it possible to smoothly switch the output polarity after releasing the short circuit, and thereby to obtain a good arc generation state.

### REFERENCE NUMERALS

| | | | | | |
|---|---|---|---|---|---|
| 1: | Welding wire | 2: | Base material | 3: | Arc |
| 4: | Welding torch | 5: | Feed roll | 6: | Flux feeder |
| AMC: | Current amplitude modulation circuit | | | | |
| Amc: | Current amplitude modulation signal | | | | |
| CC: | External characteristic control circuit | | | | |
| EI: | Current error amplification circuit | | | | |
| Ei: | Current error amplification signal | | | | |
| EN: | Electrode negative polarity | | | | |
| EP: | Electrode positive polarity | | | | |
| FC: | Feed control circuit | Fc: | Feed control signal | | |
| FMC: | Variable feed speed control circuit | | | | |
| Fmc: | Feed speed modulation signal | Fw: | Feed speed | | |
| ICR: | Current control setting circuit | | | | |
| Icr: | Current control setting signal | | | | |
| ID: | Current detection circuit | | | | |
| Id: | Current detection signal | Idr: | DC setting signal | | |
| IED: | Current effective value detection circuit | | | | |
| Ied: | Current effective value setting signal | | | | |
| IPR: | Short-circuit current peak value setting circuit | | | | |
| Ipr: | Short-circuit current peak value setting signal | | | | |
| IR: | Current setting circuit | Ir: | Current setting signal | | |
| ISR: | Short-circuit current setting circuit | | | | |
| Isr: | Short-circuit current setting signal | | | | |
| Iw: | Welding current | MR: | Output mode setting circuit | | |
| Mr: | Output mode setting signal | PM: | Power main circuit | | |
| SD: | Short-circuit determination circuit | | | | |
| Sd: | Short-circuit determination signal | | | | |
| SPN: | Polarity switching setting circuit | | | | |
| Spn: | Polarity switching signal | | | | |
| SR: | Short-circuit current rise rate setting circuit | | | | |
| Sr: | Short-circuit current rise rate setting signal | | | | |
| Ten: | Electrode negative polarity period | | | | |
| Tep: | Electrode positive polarity period | | | | |
| TNR: | Electrode negative polarity period setting circuit | | | | |
| Tnr: | Electrode negative polarity period setting signal | | | | |
| Tpn: | Polarity signal | | | | |
| TPR: | Electrode positive polarity period setting circuit | | | | |
| Tpr: | Electrode positive polarity period setting signal | | | | |
| VD: | Voltage detection circuit | | | | |
| Vd: | Voltage detection signal | | | | |
| VED: | Voltage effective value detection circuit | | | | |
| Ved: | Voltage effective value detection signal | | | | |
| VR: | Voltage setting circuit | Vr: | Voltage setting signal | | |
| Vw: | Welding voltage | WM: | Feeder | | |

## Claims

1. A submerged arc welding control method for performing welding by feeding a welding wire (1) and providing a welding voltage (Vw) and a welding current (Iw) between the welding wire (1) and a base material (2) to generate an arc (3), the submerged arc welding control method comprising:
providing a short-circuit current when a short circuit between the welding wire (1) and the base material (2) is determined; and **characterized by**:
controlling a peak value of the short-circuit current to be in a range of 1500 A to 2500 A.

2. The submerged arc welding control method according to claim 1, further comprising controlling a rise rate of the short-circuit current to be in a range of 400 A/ms to 1500 A/ms.

3. The submerged arc welding control method according to claim 1 or 2, further comprising:
outputting the welding voltage (Vw) and the welding current (Iw) as an alternating voltage and an alternating current by cyclically switching an output polarity between an electrode positive polarity (EP) and an electrode negative polarity (EN); and
controlling the output polarity not to be switched during the short circuit.

4. The submerged arc welding control method according to claim 3, further comprising switching the output polarity by lowering an absolute value of the welding current (Iw) to a polarity switching current value after the short circuit is released and the arc (3) is regenerated.

## Patentansprüche

1. Verfahren zur Steuerung des Unterpulverschweißens zum Durchführen eines Schweißvorgangs durch Zuführen eines Schweißdrahts (1) und durch Bereitstellen einer Schweißspannung (Vw) und eines Schweißstroms (Iw) zwischen dem Schweißdraht (1) und einem Grundwerkstoff (2) zur Erzeugung eines Lichtbogens (3), wobei das Steuerverfahren für das Unterpulverschweißen umfasst:
Bereitstellen eines Kurzschlussstroms, wenn ein Kurzschluss zwischen dem Schweißdraht (1) und dem Grundwerkstoff (2) festgestellt wird; und **gekennzeichnet durch**:
dass ein Spitzenwert des Kurzschlussstroms so gesteuert wird, dass er in einem Bereich von 1500 A bis 2500 A liegt.

2. Verfahren zur Steuerung des Unterpulverschweißens nach Anspruch 1, das ferner das Steuern einer Anstiegsrate des Kurzschlussstroms auf einen Bereich von 400 A/ms bis 1500 A/ms umfasst.

3. Verfahren zur Steuerung des Unterpulverschweißens nach Anspruch 1 oder 2, ferner umfassend:
Ausgeben der Schweißspannung (Vw) und des Schweißstroms (Iw) als Wechselspannung und Wechselstrom durch zyklisches Umschalten einer Ausgangspolarität zwischen einer positiven Elektrodenpolarität (EP) und einer negativen Elektrodenpolarität (EN); und
Steuerung der Ausgangspolarität, sodass diese während des Kurzschlusses nicht umgeschaltet wird.

4. Verfahren zur Steuerung des Unterpulverschweißens nach Anspruch 3, das ferner das Umschalten der Ausgangspolarität durch Verringern eines Absolutwerts des Schweißstroms (Iw) auf einen Polaritätsumschaltstromwert umfasst, nachdem der Kurzschluss aufgehoben und der Lichtbogen (3) wiederhergestellt ist.

## Revendications

1. Procédé de commande de soudage à l'arc submergé pour réaliser un soudage en alimentant un fil d'apport (1) et en fournissant une tension de soudage (Vw) et un courant de soudage (Iw) entre le fil d'apport (1) et un élément de base (2) pour générer un arc (3), le procédé de commande de soudage à l'arc submergé comprenant :
- fournir un courant de court-circuit lorsqu'un court-circuit est détecté entre le fil d'apport (1) et l'élément de base (2) ; et étant **caractérisé par**
- commander la valeur de crête du courant de court-circuit pour qu'elle soit dans une plage de 1500 A à 2500 A.

2. Le procédé de commande de soudage à l'arc submergé selon la revendication 1, comprenant en outre commander une vitesse de montée du courant de court-circuit dans une plage de 400 A/ms à 1500 A/ms.

3. Le procédé de commande de soudage à l'arc submergé selon la revendication 1 ou 2, comprenant en outre :
produire la tension de soudage (Vw) et le courant de soudage (Iw) sous forme de tension et de courant alternatifs en commutant cycliquement une polarité de sortie entre une polarité positive d'électrode (EP) et une polarité négative d'électrode (EN) ;
commander la polarité de sortie pour qu'elle ne soit pas commutée pendant un court-circuit.

4. Le procédé de commande de soudage à l'arc submergé selon la revendication 3, comprenant en outre commuter la polarité de sortie en abaissant une valeur absolue du courant de soudage (Iw) à une valeur de courant de commutation de polarité près que le court-circuit a été supprimé et que l'arc a été régénéré.
